# EUROPÄISCHE PATENTANMELDUNG

(11) **EP 1 049 226 A2**
(43) Veröffentlichungstag der Anmeldung: **02.11.2000**
(21) Anmeldenummer: 00108763.4
(22) Anmeldetag: 25.04.2000
(51) Int. Cl.: H02G 3/06

(54) **Vorrichtung zum Verbinden von Kabelkanal-Abschnitten**

(30) Priorität: 29.04.1999 CH 78599
(71) Anmelder: ZURECON AG, CH-8003 Zürich (CH)
(72) Erfinder: Egli, Arturo J., 5300 Turgi (CH)
(74) Vertreter: Kägi, Otto Patentanwalt

(57) **Zusammenfassung**

Die an beiden Seitenwänden (12) von zu verbindenden Kabelkanal-Abschnitten (10) anzubringende Vorrichtung soll schraubenlos, rasch und einfach von aussen montiert werden können. Ein Verbindungsteil (20f) weist Nocken (22) auf, die in Langlöcher (14) in den Seitenwänden (12) passend eingreifen. Die Nocken (22) sind mit Krallen (23) versehen, welche zur Verankerung der Nocken (22) in den Langlöchern dienen. Um das montierte Verbindungsteil (20f) an mindestens einer der fluchtenden Seitenwände (12) zu arretieren, ist mindestens ein mit dem Verbindungsteil (20f) zusammenwirkendes Sicherungsteil (30f) vorgesehen. Es sind mehrere Varianten von Sicherungsteilen und entsprechend angepasster Verbindungsteile beschrieben.

## Beschreibung

Die Erfindung betrifft eine Vorrichtung zum Verbinden von Kabelkanal-Abschnitten, deren Seitenwände mindestens eine Längsreihe von Langlöchern aufweisen, mit einem Verbindungsteil, das mit in Langlöcher der Seitenwände passenden Nocken versehen ist und bei der Montage die Endbereiche von zwei miteinander fluchtenden Seitenwänden übergreift.

Zur Verlegung von Kabelsträngen in Gebäuden usw. werden häufig U-Profil-förmige Kabelkanäle bzw. Kabelbahnen verwendet, die aus einzelnen Abschnitten zusammengesetzt werden. Es sind Verbindungsvorrichtungen der vorgenannten Art bekannt, wobei unterschieden wird zwischen "geraden Verbindern" zur geraden Verbindung von fluchtenden Kabelbahn-Abschnitten und Formstücken, "Gelenkverbindern" zur Verbindung von Abschnitten mit vertikaler Richtungsänderung, und "Winkelverbindern", die an Stellen mit horizontaler Richtungsänderung montiert werden (Produktekatalog 1.1 der Lanz Oensingen AG, "Lanz - für die moderne Kabelführung", Ausgabe 4/97, Seite 10). Zur Befestigung der im wesentlichen plattenförmigen Verbindungselemente an den Kanalabschnitten sind dabei Schraubengarnituren vorgesehen. Bei der Montage ist also jeweils ein Kanalabschnitt und der Verbinder festzuhalten und sodann muss eine Schraube durchgesteckt und in eine auf der Innenseite des Kanals festzuhaltende Schraubenmutter eingedreht und festgezogen werden. Da die Kabelbahnen sich normalerweise hoch über dem Boden befinden und der Monteur auf einer Leiter oder einem Gerüst stehen muss, ist diese Verbindungsart ziemlich mühsam und zeitraubend.

Aus der EP-A-0 083 809 ist ferner eine Verbindungsvorrichtung bekannt, die aus einem L-förmig gebogenen Blech (eines für jede Seitenwand) besteht. Die Bleche werden in nach innen gebogene Abschlussränder der Seitenwände eingehängt und in das Innere des Kanals gedreht, bis sie hinter einem am Kanalboden vorhandenen Anschlag einklinken. Auch hier muss also der Monteur umständlich von oben in den Kanal hinein greifen. Die Verbindung ist wegen der Elastizität der L-förmigen Bleche wenig stabil und ausserdem nicht auf Zug belastbar. Ferner wird am Kanalprofil selbst eine besondere Formgebung vorausgesetzt, was einen hohen Aufwand bedeutet und für den Verwendungszweck der Kabelbahn nachteilig sein kann.

Der Erfindung liegt daher die Aufgabe zugrunde, eine Vorrichtung der eingangs genannten Gattung so zu gestalten, dass sich damit die Abschnitte eines Kabelkanals bequem und mit geringem Zeitaufwand sowie stabil miteinander verbinden lassen.

Diese Aufgabe wird erfindungsgemäss dadurch gelöst, dass an den Nocken des Verbindungsteils Krallen angeformt sind, die zur Verankerung der Nocken in den genannten Langlöchern bestimmt sind, und dass mindestens ein mit dem Verbindungsteil wirkverbundenes Sicherungsteil vorgesehen ist, um das montierte Verbindungsteil an mindestens einer der fluchtenden Seitenwände zu arretieren.

Die Vorteile der erfindungsgemässen, schraubenlosen Verbindung werden insbsondere darin gesehen, dass sie mit wenigen, einfachen Handgriffen an der Kanal-Aussenseite montiert werden kann (auch die Montage an der Innenseite ist grundsätzlich möglich) und die mechanische Stabilität der bisher angewendeten Schraubverbindung mindestens ebenbürtig ist. Das Kanalprofil kann unverändert und ohne zusätzliche Bearbeitung verwendet werden. Nachstehend wird die Erfindung anhand von Ausführungsbeispielen in Verbindung mit der Zeichnung näher erläutert.
- Fig. 1: zeigt Abschnitte eines Kabelkanals, deren Enden durch eine Vorrichtung nach dem Stand der Technik miteinander verbunden werden,
- Fig. 2: zeigt ein erstes Verbindungsteil gemäss einem Ausführungsbeispiel der Erfindung von hinten (d.h. von der Kanalseite her gesehen),
- Fig. 3: zeigt dasselbe Teil von unten und
- Fig. 4: in Seitenansicht,
- Fig. 5, 6 und 7: veranschaulichen perspektivisch Ausführungsbeispiele mit drei verschiedenen Varianten von Sicherungsteilen,
- Fig. 8: zeigt im Schnitt die Vorrichtung nach Fig. 6 während der Montage,
- Fig. 9: zeigt die entsprechende Schnittdarstellung im fertig montierten Zustand,
- Fig. 10: ist die analoge Schnittdarstellung zur Variante nach Fig. 7, fertig montiert,
- Fig. 11: zeigt ein weiteres Ausführungsbeispiel einer Sicherung im Schnitt, und
- Fig. 12: ist die Ansicht zu Fig. 11 in Richtung des Pfeils A gesehen.

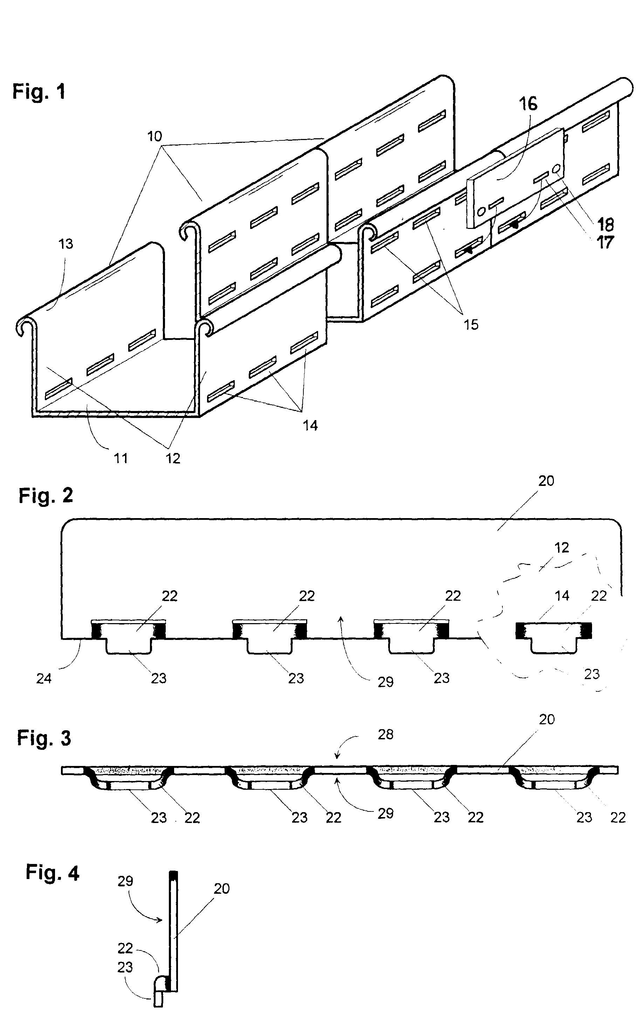

In Fig. 1 sind bekannte, U-Profil-förmige Abschnitte 10 eines Kabelkanals gezeigt, die jeweils zwei durch einen Boden 11 verbundene Seitenwände 12 aufweisen. Die Seitenwände 12, oben mit einem nach aussen (gegebenenfalls auch nach innen) gebogenen Abschlussrand 13 versehen, weisen eine in Bodennähe angeordnete Reihe von Langlöchern 14 auf; weitere Langlöcher 15 können auch im oberen Bereich der Seitenwände 12 vorhanden sein. Als gerade Verbinder der Kanalabschnitte 10 wurden bisher (an beiden Seitenwänden) bekannte, plattenförmige Verbindungsteile 16 aus Blech verwendet. Die Teile 16 sind mit Nocken 17, die in Langlöcher 14 passen, und Schraubenbohrungen 18 versehen. Bei der Montage der Teile 16 wurden die gegen die Kanalwände hin vorstehenden Nocken 17 in Langlöcher von zwei fluchtenden, zu verbindenden Kanalabschnitten 10 eingeführt. Abschliessend wurden die Teile 16 mittels Schrauben, die durch die Bohrungen 18, Langlöcher 14 und innenliegende Muttern (nicht dargestellt) geführt wurden, mit beiden Abschnitten 10 verschraubt.

Anstelle der Teile 16 und der Verschraubungen werden gemäss der Erfindung Verbindungsteile 20, z.B. gemäss Fig. 2 bis 4, sowie mit diesen wirkverbundene (weiter unten beschriebene) Sicherungsteile verwendet. Das erste Verbindungsteil 20 nach Fig. 2 bis 4 in Form einer Platte weist entlang dem unteren Rand 24 mehrere Nocken 22 auf, die zur Rückseite 29 hin ausgebogen und mit nach unten weisenden Krallen 23 versehen sind. Die Abmessungen der Nocken 22 sind entsprechend den in den Kanal-Seitenwänden 12 vorhandenen Langlöchern 14 gewählt, so dass bei der Montage jeweils ein Langloch 14 von einem Nocken 22 praktisch spielfrei ausgefüllt wird (rechts in Fig. 2 angedeutet). Wenn die Nocken 22 mit den Krallen voran in Langlöcher 14 eingeführt und danach das Verbindungsteil 20 an die Seitenwand angelegt wird, so bleiben die Nocken dank der Krallen 23 in den Langlöchern verankert. Das Verbindungsteil lässt sich auch in Längsrichtung der Löcher 14 praktisch nicht verschieben. Um das Einführen der Nocken 22 bzw. das anschliessende Ablegen (Hochklappen) des Teils 20 zu erleichtern, können die Nocken am oberen Rand etwas abgerundet sein, wie in Fig. 4 sichtbar ist. Ab jedem Verbindungsteil 20 sind mindestens zwei Nocken 22 mit Krallen 23 erforderlich, d.h. je einer zum Eingriff in ein Loch 14 an jedem der zu verbindenden Kanalabschnitte. Vorzugsweise werden jedoch gemäss Fig. 2 und 3 wenigstens vier Nocken und Krallen vorgesehen.

Durch an beiden Kanal-Seitenwänden 12 montierte Verbindungsteile 20 und den passenden Eingriff ihrer Nocken in die Langlöcher 14 entsteht eine stabile, formschlüssige Längsverbindung zwischen zwei fluchtenden, aneinander anschliessenden Kanalabschnitten 10. Es ist jedoch dafür zu sorgen, dass ein montiertes Verbindungsteil 20 in seiner Lage fixiert bleibt bzw. nicht zurückklappen kann (wobei die Nocken 22 aus den Langlöchern 14 heraustreten würden). Hierfür ist mindestens ein mit dem Verbindungsteil 20 wirkverbundenes Sicherungsteil vorgesehen. Ein solches Sicherungsteil dient im wesentlichen nur zur Fixierung des Verbindungsteils und nicht zur Aufnahme von Verbindungskräften. Im Folgenden werden verschiedene beispielsweise Anordnungen mit solchen Sicherungsteilen beschrieben, gegebenenfalls mit entsprechender Anpassung des Verbindungsteils.

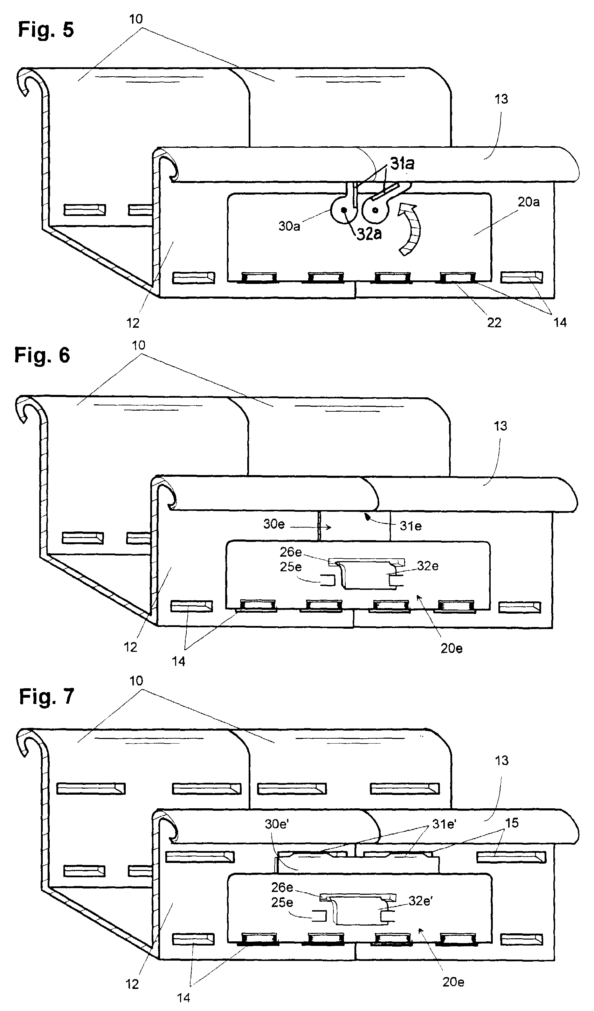

Gemäss Fig. 5 ist das Verbindungsteil 20a zur Verbindung der beiden Kanalabschnitte 10 eingesetzt. An jeder der miteinander fluchtenden Seitenwände 12 greifen zwei Nocken 22 in Langlöcher 14, wobei die Krallen 23 (nicht sichtbar) die Seitenwände unterhalb der Langlöcher hintergreifen (selbstverständlich ist je ein Teil 20a an beiden gegenüberliegenden Seitenwänden 12 eingesetzt). Um das Verbindungsteil 20a - das im übrigen gleich ausgebildet ist wie das Teil 20 nach Fig. 2 bis 4 - in seiner Lage, d.h. an der Seitenwand 12 anliegend, zu fixieren, sind zwei Sicherungsteile in Form von Schwenkhebeln 30a vorgesehen. Diese sind über Gelenke 32a am Teil 20a gelagert und zunächst, beim Einsetzen des Teils 20a, etwa horizontal oder nach unten weisend ausgerichtet. Sobald das Verbindungsteil 20a an den Seitenwänden 12 anliegt, werden die Hebel 30a, wie mit dem Pfeil in Fig. 5 angedeutet, nach oben geschwenkt, so dass sie unter den Abschlussrand 13 greifen und damit das Teil 20a arretieren. Zur bequemen Betätigung der Schwenkhebel 30a sind sie mit Griffen 31a versehen, die zudem in der Endstellung zwecks Sicherung der Vorrichtung miteinander verbunden werden können (nicht dargestellt). Grundsätzlich würde aber ein einziger Schwenkhebel 30a zur Sicherung ausreichen. Falls am Kanalprofil ein nach aussen gebogener Abschlussrand 13 fehlt, könnte oben in der Seitenwand für jeden Schwenkebel ein (nicht dargestellter) Haken o. dgl. zur Arretierung vorgesehen sein.

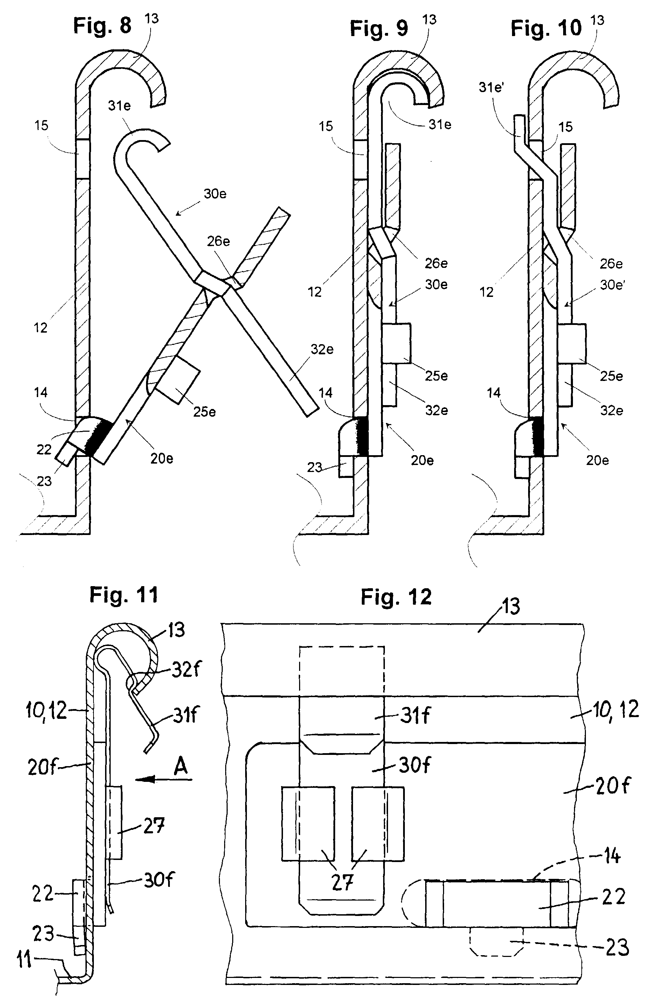

Die Fig. 6 zeigt in Verbindung mit den Fig. 8 und 9 ein weiteres Ausführungsbeispiel einer Sicherung der Vorrichtung. Ein Sicherungsteil 30e, gebildet durch einen etwa in der Mitte abgeknickten Blechstreifen, ist durch einen Schlitz 26e im Verbindungsteil 20e hindurchgesteckt und darin gelenkig beweglich sowie seitlich verschiebbar. Am oberen Ende weist das Sicherungsteil 30e eine Rundung 31e auf. Das Verbindungsteil 20e weist unterhalb des Schlitzes 26e zwei über die Grundfläche vorstehende Haken 25e auf, wobei ihr Abstand etwas grösser ist als die Breite des Teils 32e.

Bei der Montage der Vorrichtung wird das Verbindungsteil 20e mit seinen Nocken 22 und Krallen 23 in die Langlöcher 14 eingesetzt, wobei das Sicherungsteil etwa die Lage nach Fig. 8 einnimmt. Anschliessend wird das Verbindungsteil 20e hochgeklappt und das Sicherungsteil 30e entsprechend nach oben geschoben, bis beide Teile an den Kanal-Seitenwänden 12 anliegen und die Rundung 31e unter den Rand 13 greift (Fig. 9). Zuletzt wird das Sicherungsteil 30e im Schlitz 26e seitlich nach rechts oder links verschoben, damit sein unterer Teil 32e unter einen der Haken 25e zu liegen kommt. Die Vorrichtung ist dann in der Lage nach Fig. 9 arretiert und die Kanalabschnitte 10 sind stabil verbunden und aufeinander ausgerichtet.

Die Variante nach Fig. 7 und 10 verwendet das gleiche Verbindungsteil 20e wie beim vorangehenden Beispiel, lediglich das Sicherungsteil 30e' ist im oberen Bereich abweichend gestaltet. Es ist oberhalb des Schlitzes 26e verbreitert und weist vorzugsweise zwei Abkröpfungen 31e' auf, die zum Eingriff in obere Langlöcher oder Schlitze 15 in den Seitenwänden 12 bestimmt sind. Diese Variante eignet sich somit auch für Kanalprofile, die keinen nach aussen gebogenen Abschlussrand 13 aufweisen; allenfalls müssen die Schlitze 15 nicht in durchgehenden Reihen vorhanden sein, sondern können jeweils nur an den Enden der Kanalabschnitte angebracht werden. Der Montagevorgang ist im übrigen gleich wie vorangehend beschrieben, nur dass das Sicherungsteil 30e' oben nicht unter den Rand 13 greift, sondern sich mit den Abkröpfungen 31e' in den Schlitzen 15 verankert.

Beim weiteren Ausführungsbeispiel nach Fig. 11 und 12 wirkt das Sicherungsteil 30f wiederum mit dem Rand 13 des Kanalprofils zusammen. In Fig. 12 ist vom Verbindungsteil 20f nur das linke Ende mit einem Sicherungsteil 30f, sowie ein entsprechender Teil der einen Kanal-Seitenwand 12 dargestellt; das Verbindungsteil setzt sich nach rechts fort und ist am rechten Ende, im Bereich der Seitenwand des anschliessenden Kanalabschnittes, symmetrisch ausgebildet und mit einem gleichen Sicherungsteil versehen. Das Sicherungsteil 30f besteht aus einem elastischen Streifen aus Federstahl, der oben eine zurückgebogene Grifflasche 31f mit einer Knickung 32f aufweist. Unten ist das Teil 30f in zwei aus dem Verbindungsteil 20f herausgebogenen Lappen 27 geführt. In diesen Führungen ist das Sicherungsteil 30f vertikal verschiebbar. Vor der Montage befinden sich die beiden Sicherungsteile 30f noch in einer Stellung weiter unten. Das Verbindungsteil 20f wird an den beiden fluchtenden Seitenwänden 12 eingesetzt und angelegt. Anschliessend werden beide Sicherungsteile 30f nach oben geschoben, bis die Knickung 32f an der Endkante des Randes 13 einrastet. Dadurch bleiben die Sicherungsteile in der dargestellten, oberen Lage gehalten und das Verbindungsteil 27f ist zuverlässig arretiert. Wenn nötig können die Sicherungsteile durch Druck auf die Grifflasche 31f leicht wieder gelöst und nach unten geschoben werden, um die Verbindung zu demontieren. Wie leicht einzusehen ist, wäre die Arretierung des Verbindungsteils 20f bereits durch ein einziges Sicherungsteil 30f gewährleistet; vor allem aus Symmetriegründen werden vorzugsweise, wie oben erwähnt, zwei solcher Teile vorgesehen.

Es sind natürlich noch weitere Varianten der Vorrichtung und insbesondere der Sicherungsteile denkbar. Dabei ist die hohe Stabilität und Belastbarkeit jeweils durch die solide Verankerung der Nocken infolge der bei den Langlöchern eingreifenden Krallen gegeben. Die schraubenlose Montage der Vorrichtung erfolgt rasch und bequem, vor allem auch deshalb, weil sie ausschliesslich aussen an den Kanal-Seitenwänden erfolgt und der Monteur nicht in das Innere des Kanals hineingreifen muss. Zu erwähnen ist schliesslich, dass der nutzbare Kanalquerschnitt durch die Vorrichtung praktisch nicht vermindert wird.

## Patentansprüche

1. Vorrichtung zum Verbinden von Kabelkanal-Abschnitten (10), deren Seitenwände (12) mindestens eine Längsreihe von Langlöchern (14) aufweisen, mit einem Verbindungsteil (20), das mit in Langlöcher (14) der Seitenwände (12) passenden Nocken (22) versehen ist und bei der Montage die Endbereiche von zwei miteinander fluchtenden Seitenwänden (12) übergreift, dadurch **gekennzeichnet**, dass an den Nocken (22) Krallen (23) angeformt sind, die zur Verankerung der Nocken (22) in den genannten Langlöchern (14) bestimmt sind, und dass mindestens ein mit dem Verbindungsteil (20) wirkverbundenes Sicherungsteil (30) vorgesehen ist, um das montierte Verbindungsteil (20) an mindestens einer der fluchtenden Seitenwände (12) zu arretieren.

2. Vorrichtung nach Anspruch 1, dadurch gekennzeichnet, dass das Verbindungsteil (20) zum Eingriff in zwei fluchtende, zu verbindende Seitenwände (12) mindestens je zwei Nocken (22) mit Krallen (23) aufweist.

3. Vorrichtung nach Anspruch 1 oder 2, dadurch gekennzeichnet, dass die Nocken (22) mit nach unten weisenden Krallen (23) entlang dem unteren Rand des Verbindungsteils (20) angeordnet sind.

4. Vorrichtung nach Anspruch 1, dadurch gekennzeichnet, dass das mindestens eine Sicherungsteil (30e') in einer Arretierstellung in mindestens ein in einer weiteren Reihe angeordnetes Langloch (15) eingreift.

5. Vorrichtung nach Anspruch 1, dadurch gekennzeichnet, dass das mindestens eine Sicherungsteil (30a, 30e, 30f) in einer Arretierstellung einen nach aussen gebogenen Abschlussrand (13) der Kanal-Seitenwand (12) hintergreift.

6. Vorrichtung nach Anspruch 1, dadurch gekennzeichnet, dass das mindestens eine Sicherungsteil (30a) als am Verbindungsteil (20a) drehbar gelagerter Schwenkhebel ausgebildet ist.

7. Vorrichtung nach Anspruch 1, dadurch gekennzeichnet, dass das mindestens eine Sicherungsteil (30e, 30e') als abgeknickter Blechstreifen ausgebildet ist, durch einen Schlitz ((26e) im Verbindungsteil (20e) hindurchgesteckt und in diesem schwenkbar und seitlich zwischen einer schwenkbaren und einer am Verbindungsteil (20e) arretierten Lage verschiebbar ist.

8. Vorrichtung nach Anspruch 1, dadurch gekennzeichnet, dass das mindestens eine Sicherungsteil (30f) als federnder Blechstreifen ausgebildet und in am Verbindungsteil (20f) angeordneten Führungen (27) vertikal verschiebbar ist.

9. Vorrichtung nach den Ansprüchen 5 und 8, dadurch gekennzeichnet, dass das mindestens eine Sicherungsteil (30f) mit einer federnden Grifflasche (31f) und einer Raststelle (32f) für die Endkante des Anschlussrandes (13) versehen ist.
